# FASCICULE DE BREVET EUROPEEN

(11) **EP 0 902 494 B1**
(45) Date de publication et mention de la délivrance du brevet: **07.07.2004**
(21) Numéro de dépôt: 98402259.0
(22) Date de dépôt: 14.09.1998
(51) Int. Cl.: H01M 10/50, H01M 2/10

(54) **Batterie monobloc munie d'un dispositif de gestion thermique**
Monoblock Batterie mit Thermischekontrollanordnung
Monobloc battery having a thermal management system

(30) Priorité: 15.09.1997 FR 9711434; 30.04.1998 FR 9805538
(43) Date de publication de la demande: 17.03.1999
(73) Titulaire: ALCATEL, 75008 Paris (FR)
(72) Inventeur: Verhoog, Roelof, 33200 Bordeaux (FR); Barbotin, Jean-Loup, 33370 Pompignac (FR)
(74) Mandataire: Cabinet Hirsch

(56) Documents cités:
- EP-A- 0 596 794
- DE-U- 9 210 384
- FR-A- 2 742 002
- US-A- 5 460 900

## Description

La présente invention concerne une batterie monobloc munie d'un dispositif de gestion de la température. Dans un concept de type monobloc, les éléments d'accumulateurs sont contenus dans les alvéoles d'un seul conteneur, généralement en matière plastique et de forme prismatique. Chaque élément est un faisceau électrochimique constitué par l'assemblage alternatif d'électrodes positives et négatives séparées les unes des autres par un séparateur.

Une batterie monobloc comprenant un boîtier en matière plastique, munie d'un dispositif de refroidissement par un fluide en circulation est décrite dans la demande de brevet européen EP-0 596 778. Le dispositif de refroidissement comporte deux flasques soudés de manière étanche respectivement à deux parois opposées du boîtier, chacun des flasques définissant avec la paroi correspondante un compartiment de circulation présentant à sa partie supérieure un orifice d'entrée et un orifice de sortie pour le fluide.

Un tel dispositif nécessite deux raccordements par compartiment de circulation, l'un pour l'entrée l'autre pour la sortie du fluide. Dans le cas où plusieurs monoblocs sont associés, ces raccordements présentent des cheminements complexes et encombrants (intersection, longueur du raccord, ...), et leur nombre diminue la fiabilité de l'étanchéité de l'ensemble du système de refroidissement.

Un autre système de gestion thermique est décrit dans la demande de brevet européen EP-0 624 916. Les compartiments de circulation du liquide sont placés dans les cloisons de séparation des alvéoles du bac et reliés à une entrée et une sortie commune par des rampes longitudinales aménagées dans un couvercle rapporté. Ces rampes sont constituées par des canaux formés de plusieurs pièces jointives et chaque compartiment est individuellement relié à la rampe.

Le nombre des raccordements prévu rend l'étanchéité de ce dispositif peu fiable. En outre la disposition des compartiments de circulation de liquide et la présence de deux rampes longitudinales conduisent à une augmentation notable du volume de la batterie et un encombrement de la surface disponible sur le couvercle. Pour compenser l'encombrement du système de refroidissement, le couvercle ne porte que deux bornes électriques nécessaires au raccordement à un circuit extérieur. Une telle disposition implique l'utilisation d'un dispositif de liaison électrique interne devant traverser d'une façon étanche la cloison de séparation de deux alvéoles contiguës. Ces dispositifs ne sont pas suffisamment fiables électriquement et mécaniquement dans le cas d'une batterie étanche à électrolyte alcalin pour permettre sont utilisation dans un véhicule électrique.

La présente invention a pour but de proposer une batterie monobloc munie d'un dispositif de gestion thermique dont l'encombrement est réduit et la fiabilité accrue.

L'objet de la présente invention est une batterie monobloc étanche possédant un boîtier prismatique comprenant :
- un bac constitué d'une pièce unique en matière plastique comportant deux parois latérales, deux parois longitudinales, une paroi transversale, et au moins une cloison verticale perpendiculaire auxdites parois longitudinales divisant ledit bac en alvéoles destinées à recevoir un faisceau électrochimique,
- un moyen de fermeture dudit bac qui est une pièce fixée de manière étanche audit bac et auxdites cloisons du côté opposé à ladite paroi transversale,
- deux flasques fixés de manière étanche sur chacune desdites parois longitudinales définissant avec ladite paroi un compartiment de circulation pour un fluide caloporteur,
- deux tubulures situées sur ladite paroi transversale dudit bac et communiquant par des passages incorporés dans ladite paroi transversale, formant une entrée et une sortie pour ledit fluide communes auxdits compartiments,
- deux orifices par alvéole, débouchant à l'intérieur du boîtier, placés cote à côte sur ladite paroi transversale et regroupés dans une bande centrale parallèle auxdites parois longitudinales, destinés à recevoir des bornes électriques de sortie de courant,
- un orifice débouchant par alvéole placé sur ladite paroi transversale selon une bande latérale parallèle à ladite bande centrale du coté opposé à ladite entrée et ladite sortie de fluide, destiné à recevoir une soupape de sécurité pour l'échappement des gaz en cas de surpression.

Le bac de la batterie selon l'invention est réalisé d'une seule pièce par moulage, y compris les cloisons séparant les alvéoles. Chaque paroi longitudinale porte un compartiment indépendant délimité par des flasques dans lequel circule un fluide. Les compartiments sont raccordés au niveau de l'entrée et de la sortie du fluide, la circulation du fluide dans chaque compartiment restant autonome. Le raccordement entre les compartiments d'un même monobloc est aménagé dans l'épaisseur de la paroi transversale, par exemple sous forme d'un tube creux. Cette disposition confère à la batterie monobloc selon la présente invention les principaux avantages suivants: l'absence de raccordements supprime totalement les risques de fuite du fluide caloporteur, et l'encombrement du dispositif est réduit.

La batterie monobloc comporte une borne de polarité positive et une borne de polarité négative par alvéole recevant un élément d'accumulateur. Cela qui évite d'utiliser pour le raccordement électrique un dispositif interne nécessitant la traversée étanche de la cloison. Ainsi la batterie électriquement est rendue plus fiable en supprimant notamment les courants de fuite entre deux faisceaux électrochimiques contenus dans des alvéoles adjacentes. La disposition des bornes par couple formant une bande permet de minimiser la longueur des connexions nécessaires au raccordement électrique des éléments entre eux.

Après l'introduction des faisceaux électrochimiques dans chacune des alvéoles et la mise en place dans les orifices qui leur sont destinés des bornes préalablement connectées au faisceau, le boîtier est fermé par une pièce qui constitue alors le fond de la batterie monobloc. La pièce de fermeture est fixée non seulement aux parois latérales et longitudinales du bac mais aussi à chaque cloison. De cette manière chaque alvéole est fermée de manière étanche. La pièce peut être fixée par exemple par collage ou soudure.

Chaque alvéole est munie d'une soupape de sécurité. Les soupapes sont mises en place après fixation de la pièce de fermeture et remplissage en électrolyte de chaque alvéole. Le remplissage s'effectue par les orifices destinés à accueillir les soupapes et avant la mise en place de celles-ci.

Selon une variante, ladite paroi transversale porte en outre au moins une cavité non débouchante destinée à recevoir un moyen de mesure de la température, ladite cavité étant située entre deux orifices destinés auxdites soupapes. Cette cavité ne doit pas déboucher dans une alvéole afin de préserver l'étanchéité de la batterie.

Selon une autre variante, ladite paroi transversale porte en outre un logement non débouchant situé entre lesdites tubulures. Ce logement est destiné par exemple à contenir des connecteurs électriques pour le raccordement de la batterie vers un circuit extérieur, ou bien encore des composants électroniques de contrôle et de gestion de la batterie monobloc. Ces composants électroniques sont par exemple ceux décrit dans la demande de brevet européen EP-0 623 828.

Selon un mode particulier de réalisation de l'invention, toutes les parties dudit boîtier (bac, flasques et fond) sont en matière plastique, et de préférence constituées du même matériau. On utilise par exemple un matériau thermoplastique comme le polyamide 6 (PA6), le polyamide 11 (PA11), le polyamide 12 (PA12), l'oxyde de polypropylène (PPO), la polysulfone (PSU), le polyéthersulfone (PES). le copolymère styrène/acrylonitrile (SAN), le terpolymère acrylonitrile/butadiène/styrène (ABS), le polypropylène (PP), un copolymère des précédents ou un alliage de polymères comme par exemple celui décrit dans la demande de brevet européen EP-0 736 916. L'industrialisation est facilitée par le choix de l'assemblage des pièces par soudure : soudure infrarouge, soudure par miroir chauffant (encore appelée thermosoudure), soudure par vibrations ou soudure par ultrasons si les matériaux s'y prêtent. Dans certains cas, cet assemblage peut également être obtenu par collage.

Les couples d'orifices destinés aux bornes électriques sont alignés pour former une bande placée au centre de la pièce transversale. Selon encore un mode particulier de réalisation de l'invention, la largeur de ladite bande centrale est de l'ordre de la moitié de la largeur de ladite paroi transversale. Les orifices destinés aux soupapes, et éventuellement la cavité non débouchante, sont alignés le long de la bande centrale sur l'un des cotés de la pièce transversale. Du côté opposé se trouve les tubulures encadrant éventuellement un logement.

La longueur de la paroi transversale dépend du nombre d'éléments d'accumulateur, donc d'alvéoles, que comporte la batterie monobloc. La largeur de ladite paroi transversale est au moins égale à 70mm et au plus égale à 180mm. Pour une largeur inférieure de la paroi transversale, le volume occupé par les compartiments de circulation du fluide est trop pénalisant vis à vis de l'énergie massique de la batterie monobloc. Lorsque la largeur de la paroi transversale est supérieure, les compartiments de circulation se trouvent trop éloignés l'un de l'autre pour que le transfert de calories soit suffisamment efficace au centre des alvéoles.

De préférence le volume enveloppe de ladite paroi transversale a une hauteur au plus égale à 40mm, de préférence encore inférieure à 30mm. L'encombrement global de la batterie monobloc selon la présente invention est donc très réduit par rapport aux batteries de l'art antérieur. De plus le montage de la batterie est optimisé par le choix de la position des entrées/sorties du fluide caloporteur.

Selon un perfectionnement de l'invention, un capot, fixé de manière étanche sur ladite paroi transversale, recouvre lesdites bornes à l'exception de deux bornes de polarité opposées destinées à être reliées à des connexions externes. Avantageusement ledit capot est soudé de manière étanche autour de chaque couple de bornes de polarité opposée appartenant chacune à deux alvéoles différentes et reliées électriquement, ce qui permet de réduire le risque de fuite gazeuse.

Le raccordement électrique des circuits de mesure des paramètres (température, tension, pression, etc...) de la batterie monobloc, soit à un circuit externe, soit à un autre monobloc voisin peut nécessiter le parcours de fils d'un coté à l'autre de la pièce transversale. Selon une variante, ledit capot porte des moyens pour maintenir en place des fils longitudinaux, lesdits moyens étant constitués par des pattes latérales dépassant dudit capot parallèlement à ladite paroi transversale. Selon une autre variante, ledit capot porte des moyens pour guider des fils transversaux constitués par des gouttières transversales ménagées à la surface du capot.

Selon un autre perfectionnement de l'invention, ledit moyen de fermeture est une pièce en matière plastique de forme générale plane dont chaque portion de surface délimitée par la périphérie d'une alvéole présentent une concavité tournée vers l'extérieur de ladite batterie. Chaque alvéole d'une batterie étanche peut atteindre en fonctionnement une pression d'au moins 1 bar par rapport à la pression extérieure, la soupape ayant une pression de déclenchement généralement comprise entre 1 et 3 bars. Cette pression exerce notamment sur le fond du boîtier une force qui tend à le déformer. Afin que la déformation ne s'étende pas à l'extérieur du volume enveloppe de la batterie, on donne à la surface fermant chaque alvéole un profil destiné à compenser cette déformation.

Selon encore un autre perfectionnement de l'invention, la batterie monobloc est maintenue par un châssis composé de deux plaques reliées par des tirants, les plaques étant placées au contact desdites parois latérales. Le châssis et les tirants sont habituellement métalliques. Le châssis confère une meilleure tenue mécanique au monobloc. Il peut également servir à assembler plusieurs monoblocs. De préférence lesdites plaques présente une concavité tournée vers l'extérieur de ladite batterie. Et de préférence encore lesdites parois latérales présentent une concavité tournée vers l'extérieur qui épouse la forme desdites plaques.

La battene monobloc selon la présente invention est notamment utilisée pour le démarrage et la traction de véhicules (chemin de fer, véhicule routier tel qu'une automobile ou un deux-roues, etc.. ) et le secours (éclairage, chemin de fer). Le concept monobloc permet un gain important en énergie volumique et massique particulièrement avantageux dans le cas d'un véhicule électrique. Il peut s'agir notamment d'une batterie d'accumulateurs au plomb, au nickel ou au lithium.

D'autres caractéristiques et avantages de la présente invention apparaîtront au cours des exemples suivants de réalisation, donnés bien entendu à titre illustratif et non limitatif, et dans le dessin annexé sur lequel:
- la figure 1 représente une vue de dessous en perspective du boîtier d'une batterie monobloc selon l'invention,
- la figure 2 est une vue de dessus schématique du boîtier d'une batterie monobloc selon l'invention,
- la figure 3 est une coupe schématique III-III de la batterie de la figure 2,
- la figure 4 est analogue à la figure 2 pour une batterie monobloc selon l'invention,
- la figure 5 représente une variante de la pièce de fermeture.

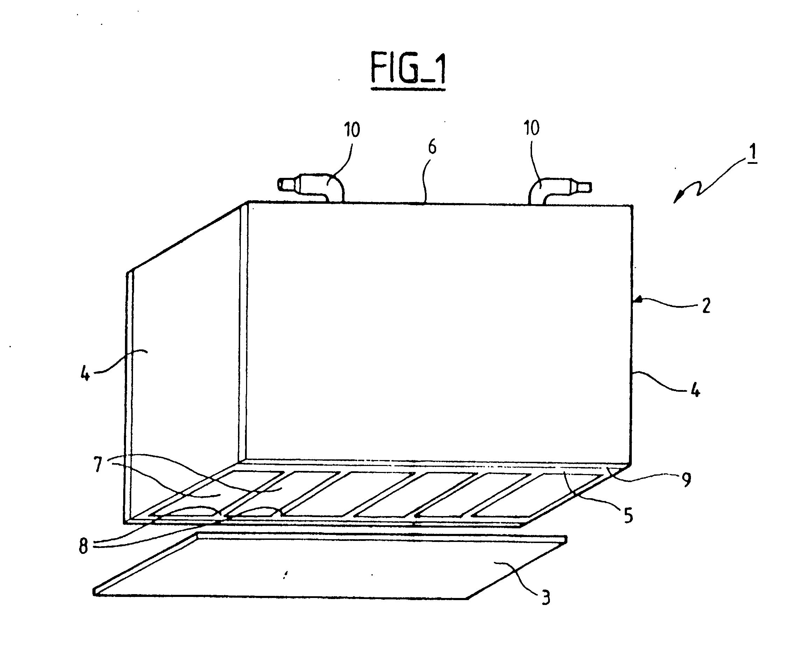

La figure 1 représente le boîtier 1 d'une batterie monobloc nickel-métal hydrurable de capacité 120Ah et de tension 7,2V selon la présente invention. Le boîtier 1 prismatique est composé d'un bac 2 en polypropylène et d'un moyen de fermeture 3 constituant un fond. Le bac 2 comporte deux parois latérales 4, deux parois longitudinales 5 et une paroi transversale 6. Il est divisé en six alvéoles 7 par des cloisons 8. Chaque alvéole 7 est destinée à contenir un élément d'accumulateur, c'est à dire un faisceau électrochimique constitué par l'assemblage alternatif d'électrodes positives et négatives séparées les unes des autres par un séparateur. Le fond 3 est destiné à être thermosoudé sur le bac 2 une fois les éléments d'accumulateurs introduits dans leurs alvéoles respectives.

Des flasques 9 sont soudées aux parois 5 pour former un compartiment de circulation pour le fluide caloporteur. L'épaisseur du compartiment de circulation avec le flasque est d'environ 2 à 4mm La paroi transversale 6 porte des tubulures 10 pour l'entrée et la sortie du fluide.

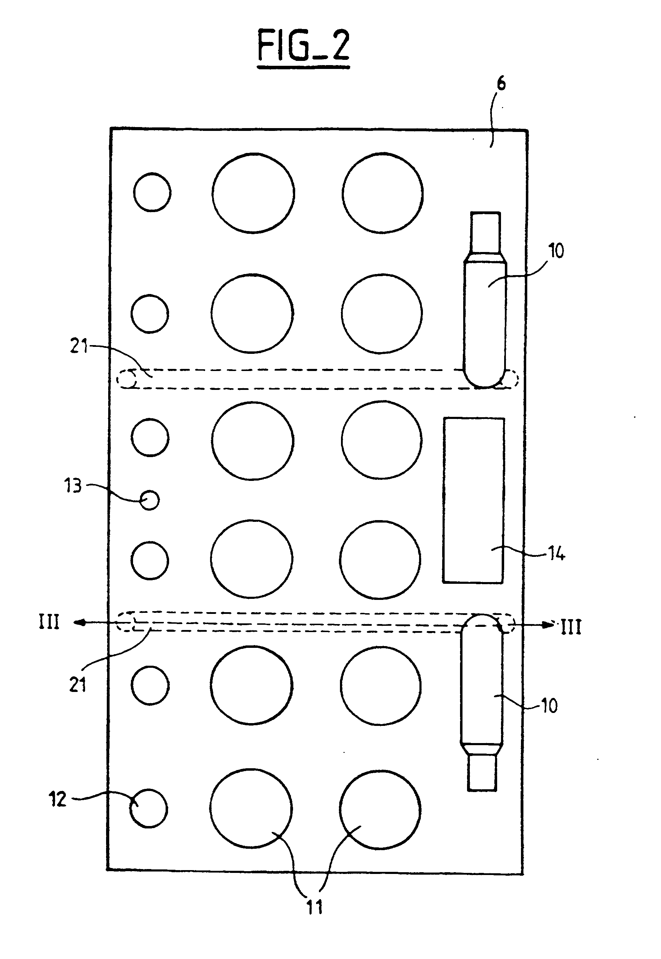

Les orifices 11 destinés à accueillir les bornes sont disposées deux par deux les une à côté des autres formant une bande au centre de la paroi 6 comme le montre la figure 2. Les orifices 12 qui recevront les soupapes sont alignés le long de la bande centrale du côté opposé aux tubulures 10.

On peut prévoir en outre une cavité 13 non débouchante dans laquelle peut être placé un dispositif destiné à la mesure de la température interne de la batterie monobloc. Pour limiter l'encombrement, la cavité 13 est située de préférence entre deux orifices 12.

On peur aussi aménager dans l'épaisseur de la paroi transversale 6 un logement 14 non débouchant placé entre les tubulures 10, destiné par exemple à contenir les composants électroniques de contrôle et de gestion de la batterie monobloc.

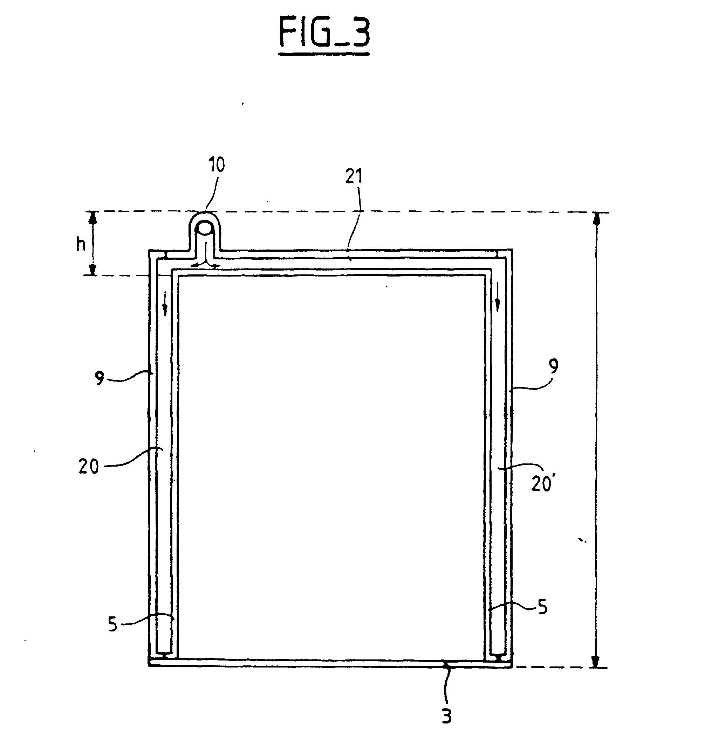

La coupe schématique selon III-III est représentée sur la figure 3. Une flasque 9 est thermosoudée sur chaque paroi 5 délimitant un espace 20, 20' destiné à recevoir un fluide caloporteur en circulation afin de refroidir ou de réchauffer la batterie selon les circonstances. Un système analogue a été décrit dans la demande de brevet européen EP-0 596 778. Pour le refroidissement on peut utiliser par exemple de l'air ou un liquide Le liquide de refroidissement est par exemple un mélange d'eau et d'éthylène-glycol. Un passage 21 met en communication les compartiments 20, 20' avec une tubulure 10 commune, par exemple pour l'entrée du fluide.

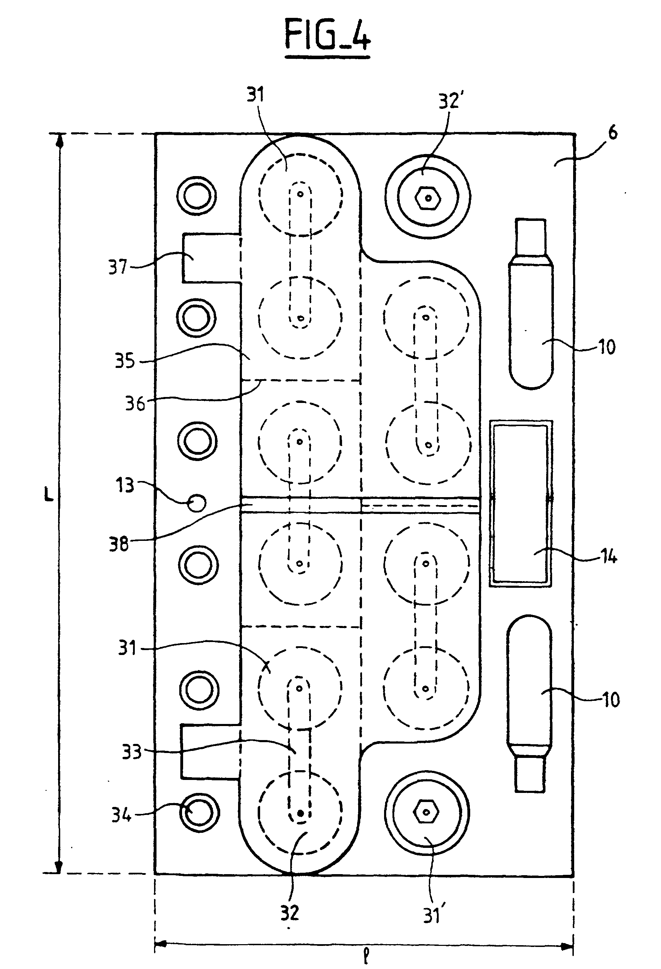

La figure 4 montre une vue de dessus de la batterie selon l'invention équipée des bornes et des soupapes après introduction des faisceaux électrochimiques dans les alvéoles et remplissage en électrolyte. On y voit les bornes de sortie du courant, alternativement positives 31 et négatives 32 à raison d'une borne de chaque polarité par alvéole, qui sont disposées deux par deux les une à côté des autres au centre de la paroi 6. On relie électriquement une borne positive 31 d'une première alvéole à une borne négative 32 d'une seconde alvéole voisine à l'aide d'une connexion 33 plane.

Chaque alvéole est munie d'une soupape de sécurité 34 en cas de surpression. Dans un accumulateur étanche alcalin, la pression de déclenchement de la soupape est habituellement comprise entre 1 bar et 3 bars relatif, et le plus souvent de l'ordre de 2 bars.

On recouvre d'un capot 35 les bornes 31, 32, à l'exception d'une borne positive 31' et d'une borne négative 32' situées de préférence près des extrémités de la paroi 6. Les bornes 31', 32' ne portent pas de connexion 33 et sont destinées à être reliées électriquement à un circuit extérieur. Le capot 35 est thermosoudé de manière étanche sur la paroi 6. La thermosoudure est effectuée de telle sorte que chaque couple de bornes 31, 32 reliées par une connexion 33 soit entouré d'un cordon continu fermé de thermosoudure 36.

Afin de faciliter les opérations de manipulation de la batterie monobloc, des pattes latérales 37 se projettent du capot 35 parallèlement à la paroi 6. Les fils parcourant longitudinalement la batterie peuvent être placés dans l'espace se trouvant entre ces pattes et la paroi 6 afin d'être maintenus en place. Dans le même but on peut aménager une ou plusieurs gouttières 38 transversalement dans la face supérieure du capot 35 pour guider les fils dans cette direction.

Dans le logement 14 est installée une boîte 39 contenant par exemple les composants électroniques. La hauteur de la boîte 39 doit être telle que, une fois installée dans le logement 14, son élévation au-dessus de la paroi 6 ne dépasse par la hauteur du volume enveloppe de la paroi transversale équipée.

La batterie monobloc représentée a une longueur L de 250mm et une largeur l de 120mm; sa hauteur totale H est de 200mm. La hauteur totale h du volume enveloppe de la paroi transversale équipée, y compris le capot, est de 25mm.

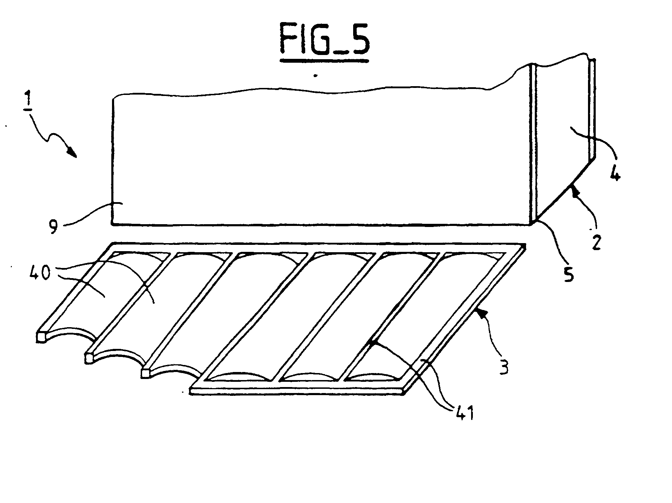

La figure 5 montre une variante de l'invention selon laquelle le fond 3 du boîtier 1 présente six surfaces 40 correspondant aux six alvéoles 7 de la batterie. Les surfaces 40 sont délimitées par des zones planes 41 qui seront thermosoudées sur les parois du bac 4, 5 et les cloisons 8 correspondantes. Les surfaces 40 ont une forme arrondie dont la concavité est tournée vers l'extérieur de la batterie. Ainsi la légère déformation (de l'ordre du mm) induite par la surpression interne reste contenue dans le volume enveloppe de la batterie monobloc.

La batterie monobloc peut être entourée d'un châssis métallique afin d'en renforcer la tenue mécanique et en faciliter la préhension. Le châssis est composé de deux plaques maintenues par deux tirants, les plaques étant placées à chaque extrémité de la batterie au contact des parois latérales.

Les plaques ont une épaisseur comprise entre 1 et 20mm, et de préférence entre 4 et 15mm, selon la largeur du faisceau électrochimique. Afin d'éviter une augmentation trop importante du poids de la batterie monobloc, il est avantageux d'évider le coeur des plaques en veillant à conserver entre les deux faces des nervures nécessaires au maintien de la rigidité de la plaque.

Les plaques et les tirants sont de préférence en métal pour une meilleure résistance mécanique, par exemple un alliage d'aluminium, un acier inoxydable, un acier protégé, un matériau composite.

Avantageusement les plaques présentent une concavité tournée vers l'extérieur de la batterie et les parois latérales présentent également une concavité tournée vers l'extérieur qui épouse la forme des plaques. La déformation induite par le gonflement des faisceaux électrochimiques est comprise entre 5 et 20% de l'épaisseur des plaques, par exemple d'environ 1mm pour des plaques d'épaisseur 9,5mm. Ainsi la déformation reste contenue dans le volume enveloppe de la batterie monobloc.

## Revendications

1. Batterie monobloc étanche possédant un boîtier prismatique (1) comprenant :
- un bac (2) constitué d'une pièce unique en matière plastique comportant deux parois latérales (4), deux parois longitudinales (5), une paroi transversale (6), et au moins une cloison verticale (8) perpendiculaire auxdites parois longitudinales (5) divisant ledit bac (2) en alvéoles (7) destinées à recevoir un faisceau électrochimique,
- un moyen de fermeture dudit bac qui est une pièce (3) fixée de manière étanche audit bac (2) et auxdites cloisons (8) du côté opposé à ladite paroi transversale (6),
- deux flasques (9) fixés de manière étanche sur chacune desdites parois longitudinales (5) définissant avec ladite paroi (5) un compartiment de circulation (20) pour un fluide caloporteur,
- deux tubulures (10) situées sur ladite paroi transversale (6) dudit bac(2) et communiquant par des passages (21) incorporés dans ladite paroi transversale (6), formant une entrée et une sortie pour ledit fluide communes auxdits compartiments (20),
- deux orifices (11) par alvéole (7), débouchant à l'intérieur du boîtier, placés cote à côte sur ladite paroi transversale (6) et regroupés dans une bande centrale parallèle auxdites parois longitudinales (5), destinés à recevoir des bornes électriques de sortie de courant,
- un orifice débouchant (12) par alvéole (7) placé sur ladite paroi transversale (6) selon une bande latérale parallèle à ladite bande centrale du coté opposé auxdites tubulures (10), destiné à recevoir une soupape de sécurité pour l'échappement des gaz en cas de surpression. '.

2. Batterie monobloc selon la revendication 1, dans laquelle ladite paroi transversale porte en outre au moins une cavité (13) non débouchante destinée à recevoir un moyen de mesure de la température, ladite cavité étant située entre deux orifices (12) destinés auxdites soupapes.

3. Batterie monobloc selon l'une des revendications 1 et 2, dans laquelle ladite paroi transversale porte en outre un logement (14) non débouchant situé entre lesdites tubulures.

4. Batterie monobloc selon l'une des revendications précédentes, dans laquelle toutes les parties dudit boîtier sont en matière plastique.

5. Batterie monobloc selon l'une des revendications précédentes, dans laquelle la largeur de ladite bande centrale est de l'ordre de la moitié de la largeur de ladite paroi transversale.

6. Batterie monobloc selon l'une des revendications précédentes, dans laquelle la largeur de ladite paroi transversale est au moins égale à 70mm et au plus égale à 180mm.

7. Batterie monobloc selon l'une des revendications précédentes, dans laquelle le volume enveloppe de ladite paroi transversale a une hauteur au plus égale à 40mm.

8. Batterie monobloc selon l'une des revendications précédentes, dans laquelle un capot (35), fixé de manière étanche sur ladite paroi transversale, recouvre lesdites bornes (31, 32) à l'exception de deux bornes de polarité opposées (31', 32') destinées à être reliées à des connexions externes.

9. Batterie monobloc selon la revendication 8, dans laquelle ledit capot est soudé de manière étanche autour de chaque couple de bornes de polarité opposée appartenant chacune à deux alvéoles différentes et reliées électriquement.

10. Batterie monobloc selon l'une des revendications 8 et 9, dans laquelle ledit capot porte des moyens pour maintenir en place des fils longitudinaux, lesdits moyens étant constitués par des pattes latérales (37) dépassant dudit capot parallèlement à ladite paroi transversale.

11. Batterie monobloc selon l'une des revendications 8 à 10, dans laquelle ledit capot porte des moyens pour guider des fils transversaux constitués par des gouttières transversales (38) ménagées à la surface du capot.

12. Batterie monobloc selon l'une des revendications précédentes, dans laquelle ledit moyen de fermeture est une pièce en matière plastique de forme générale plane dont chaque portion de surface (40) délimitée par la périphérie d'une alvéole présentent une concavité tournée vers l'extérieur de ladite batterie.

13. Batterie monobloc selon l'une des revendications précédentes, maintenue par un châssis composé de deux plaques, les plaques reliées par des tirants étant placées au contact desdites parois latérales.

14. Batterie monobloc selon la revendication 13, dans laquelle lesdites plaques présentent une concavité tournée vers l'extérieur de ladite batterie.

15. Batterie monobloc selon la revendication 14, dans laquelle lesdites parois latérales présentent une concavité tournée vers l'extérieur qui épouse la forme desdites plaques.

## Patentansprüche

1. Gasdichte Monoblockbatterie, die ein prismatisches Gehäuse (1) besitzt, aufweisend:
- ein aus einem einzigen Stückes Plastikmaterial gebildeter Behälter (2), der zwei laterale Wände (4), zwei longitudinale Wände (5), eine transversale Wand (6) und wenigstens eine vertikale Zwischenwand (8), die zu den longitudinale Wände (5) senkrecht ist und die den Behälter (2) in Zellen (7), die zur Aufnahme eines elektrochemischen Bündels bestimmt sind, aufteilt, aufweist,
- ein Verschlussmittel für den Behälter, das ein Stück (3) ist, das gasdicht am Behälter (2) und an den Zwischenwänden (8) an der gegenüberliegenden Seite zu der transversale Wand (6) befestigt ist,
- zwei Flansche (9), die gasdicht auf jeder der longitudinale Wände (5) befestigt sind, wobei sie mit der Wand (5) einen Bewegungsbereich (20) für ein flüssiges Kühlmittel definieren,
- zwei Leitungen (10), die auf der transversalen Wand (6) des Behälters (2) angeordnet sind und durch Übergänge (21), die in der transversalen Wand (6) eingefügt sind, in Verbindung stehen, wobei sie einen Eingang und einen Ausgang für die gemeinsame Flüssigkeit in den Bereichen (20) bilden,
- zwei Öffnungen (11) pro Zelle (7), die in das Innere des Gehäuses führen, die nebeneinander an der transversaler Wand (6} angebracht und in einem zentralen Band zusammengefasst sind, das zu den besagten longitudinalen Wänden (5) parallel ist, wobei sie zur Aufnahme von elektrischen Stromausgangsklemmen bestimmt sind,
- eine einmündende Öffnung (12) pro Zelle (7), die auf der transversalen Wand (6) gemäß einem lateralen Band parallel zu dem zentralem Band an der Seite gegenüber den Leitungen (10) angeordnet sind, die zur Aufnahme eines Sicherheitsventils für den Ausstoß von Gas im Falle eines Überdrucks bestimmt ist.

2. Monoblockbatterie gemäß Anspruch 1, wobei die transversale Wand außerdem wenigstens einen nicht geöffneten Hohlraum (13) trägt, der zur Aufnahme eines Temperaturmessmittels bestimmt ist, wobei der Hohlraum zwischen den zwei Öffnung (12) für die Ventile angeordnet ist.

3. Monoblockbatterie gemäß einem der Ansprüchel und 2, wobei die transversale Wand außerdem mindestens einen eine nicht geöffnete Behausung (14) trägt, die zwischen den Leitungen angeordnet ist.

4. Monoblockbatterie gemäß einem der vorhergehenden Ansprüche, wobei alle Teile des Gehäuses aus Plastikmaterial sind.

5. Monoblockbatterie gemäß einem der vorhergehenden Ansprüche, wobei die Größe des zentralen Bands in der Größenordnung der Hälfte der Breite der transversalen Wand ist.

6. Monoblockbatterie gemäß einem der vorhergehenden Ansprüche, wobei die Größe der transversalen Wand mindestens gleich 70 mm und höchstens gleich 180 mm ist.

7. Monoblockbatterie gemäß einem der vorhergehenden Ansprüche, wobei das durch die transversale Wand eingeschlossene Volumen eine Höhe von höchstens gleich 40 mm besitzt.

8. Monoblockbatterie gemäß einem der vorhergehenden Ansprüche, bei der eine Haube (35), die gasdicht auf der transversalen Wand befestigt ist, die Klemmen (31 32) mit Ausnahme von zwei Klemmen gegensätzlicher Polarität (31', 32'), die zum Verbinden mit externen Anschlüssen bestimmt sind, überdeckt.

9. Monoblockbatterie gemäß Anspruch 8, bei der die Haube gasdicht um jedes Paar von Klemmen gegensätzlicher Polarität, welche jeweils zwei unterschiedlichen und elektrisch verbundenen Zellen zugehörig sind, geschweißt ist.

10. Monoblockbatterie gemäß einem der Ansprüche8 und 9, bei der die Haube Mittel zum Aufrechterhaltung einer Platzierung von longitudinalen Leitungen trägt, wobei die longitudinalen Leitungen durch laterale Laschen (37) gebildet sind, die von der Haube parallel zur transversaler Wand hervorstehen.

11. Monoblockbatterie gemäß einem der Ansprüche8 bis 10, bei der die Haube Mittel trägt, um transversale Leitungen zu fuhren, die durch schräge Rinnen (38) gebildet sind, die an der Oberfläche der Haube ausgeführt sind.

12. Monoblockbatterie gemäß einem der vorhergehenden Ansprüche, in der das Verschlussmittel ein Stück aus einem im allgemeiner Form planen Plastikmaterial ist, bei dem jeder Abschnitt der Oberfläche (40), der durch die Peripherie einer Zelle begrenzt ist, eine Konkavität darstellt, die zur Außenseite der Batterie gerichtet ist.

13. Monoblockbatterie gemäß einem der vorhergehenden Ansprüche, die durch einen Rahmen gehalten wird, der aus zwei Platten gebildet ist, wobei die Platten durch Bänder verbunden sind, die in Kontakt zu den lateralen Wände angeordnet sind.

14. Monoblockbatterie gemäß Anspruch 13, bei der die Platten eine Konkavität darstellen, die zur Außenseite der Batterie gerichtet ist.

15. Monoblockbatterie gemäß Anspruch 14, bei der die lateralen Wände eine auf die Außenseite gerichtete Konkavität darstellen, welche die Form der Platten annehmen.

## Claims

1. A sealed one-piece battery possessing a prismatic container (1) comprising:
- a case (2) constituted by a single piece of plastic material comprising two side walls (4), two longitudinal walls (5), a transverse wall (6), and at least one vertical partition (8) perpendicular to said longitudinal walls (5) dividing said case (2) into cells (7) for receiving respective electrochemical stacks;
- closure means for closing said case, the closure means comprising a member (3) fixed in sealed manner to said case (2) and to said partitions (8) on the side of the case remote from said transverse wall (6);
- two plates (9) fixed in sealed manner to each of said longitudinal walls (5) and co-operating with said walls (5) to define respective compartments (20) for circulating a cooling fluid;
- two tube connectors (10) situated on said transverse wall (6) of said case (2) and communicating via passages (21) incorporated in said transverse wall (6) to form an inlet and an outlet for said fluid, the tube connectors being common to said compartments (20);
- two ports (11) per cell (7) open to the inside of the container, placed side by side on said transverse wall (6) and grouped together in a central strip parallel to said longitudinal walls (5) for receiving electrical output terminals; and
- one open port (12) per cell (7) placed in said transverse wall (6) in a side strip parallel to said central strip on the side of the case remote from said tube connectors (10) for receiving respective safety valves to vent gas in the event of excess pressure.

2. A one-piece battery according to claim 1, in which said transverse wall further includes at least one closed cavity (13) for receiving temperature-measuring means, said cavity being situated between two ports (12) for said valves.

3. A one-piece battery according to claim 1 or claim 2, in which said transverse wall further includes a closed housing (14) situated between said tube connectors.

4. A one-piece battery according to any preceding claim, in which all of the portions of said container are made of plastics material.

5. A one-piece battery according to any preceding claim, in which the width of said central strip is about half the width of said transverse wall.

6. A one-piece battery according to any preceding claim, in which the width of said transverse wall is not less than 70 mm and not more than 180 mm.

7. A one-piece battery according to any preceding claim, in which the envelope volume of said transverse wall has a height of no more than 40 mm.

8. A one-piece battery according to any preceding claim, in which a cover (35) fixed in sealed manner on said transverse wall covers said terminals (31, 32) with the exception of two opposite-polarity terminals (31', 32') for connection to external connections.

9. A one-piece battery according to claim 8, in which said cover is heat-sealed in leaktight manner around each pair of electrically-interconnected opposite-polarity terminals, each belonging to two different cells.

10. A one-piece battery according to claim 8 or claim 9, in which said cover carries means for holding longitudinal wires in place, said means being constituted by lateral tabs (37) projecting from said cover parallel to said transverse wall.

11. A one-piece battery according to any one of claims 8 to 10, in which said cover carries means for guiding transverse wires, said means being constituted by transverse channels (38) formed in the surface of the cover.

12. A one-piece battery according to any preceding claim, in which said closure means is a member of plastic material generally in the form of a plane in which each surface portion (40) defined by the periphery of a cell presents a concave shape facing towards the outside of said battery.

13. A one-piece battery according to any preceding claim, held by a structure made up of two plates with the plates being interconnected by tie rods placed in contact with said side walls.

14. A one-piece battery according to claim 13, in which said plates present respective concave sides facing towards the outside of said battery.

15. A one-piece battery according to claim 14, in which said side walls present respective concave sides facing outwards and matching the shape of said plates.
